# EUROPÄISCHE PATENTSCHRIFT

(11) **EP 1 981 734 B1**
(45) Veröffentlichungstag und Bekanntmachung des Hinweises auf die Patenterteilung: **14.09.2011**
(21) Anmeldenummer: 06841203.0
(22) Anmeldetag: 29.12.2006
(51) Int. Cl.: B60R 1/00, B60R 21/0134, B60Q 1/52, G08G 1/16

(54) **FAHRZEUGUMFELDERKENNUNGSSYSTEM, INSBESONDERE ZUR ERKENNUNG VON SEITLICH AUF DAS FAHRZEUG ZUKOMMENDEN OBJEKTEN UND/ODER ZUKOMMENDEM KREUZUNGSVERKEHR SOWIE VERFAHREN HIERFÜR**
VEHICLE SURROUNDINGS RECOGNITION SYSTEM, IN PARTICULAR FOR RECOGNIZING OBJECTS COMING UP LATERALLY TO THE VEHICLE AND/OR CROSSING TRAFFIC COMING UP, AND METHOD THEREFOR
SYSTEME DE RECONNAISSANCE DE L'ENVIRONNEMENT D'UN VEHICULE, NOTAMMENT POUR DETECTER DES OBJETS ET/OU UN TRAFIC D'INTERSECTION QUI SE DIRIGENT LATERALEMENT VERS LE VEHICULE ET PROCEDE CORRESPONDANT

(30) Priorität: 08.02.2006 DE 102006007173
(43) Veröffentlichungstag der Anmeldung: 22.10.2008
(73) Patentinhaber: Valeo Schalter und Sensoren GmbH, 74321 Bietigheim-Bissingen (DE)
(72) Erfinder: AMIOT, Eric, 70597 Stuttgart (DE); MATHES, Joachim, 74080 Heilbronn (DE); GOTZIG, Heinrich, 74081 Heilbronn (DE)
(74) Vertreter: Pothmann, Karsten
(86) Internationale Anmeldenummer: PCT/EP2006/012596
(87) Internationale Veröffentlichungsnummer: WO 2007/090457

(56) Entgegenhaltungen:
- EP-A- 0 899 583
- DE-A1- 10 252 229
- DE-A1- 19 845 568
- DE-A1- 19 851 434
- FR-A1- 2 551 005

## Beschreibung

Die Erfindung betrifft ein Fahrzeugumfelderkennungssystem, mit dem das Umfeld eines Fahrzeugs, insbesondere eines Kraftfahrzeugs, erkannt werden kann. Derartige Systeme sind in vielfältiger Art und Weise vorbekannt.

So sind beispielsweise Fahrzeugumfelderkennungssysteme bekannt, bei denen Radarsensoren den vor dem Fahrzeug liegenden Bereich erfassen. Ferner sind Systeme bekannt, bei denen entsprechende Sensoren an der Fahrzeugseite und/oder am Fahrzeugheck angeordnet sind, mit denen Totwinkelbereiche des Fahrzeugs erfasst werden.

Aus der gattungsbildenden DE 198 45 568 A1 ist beispielsweise vorbekannt an einem Fahrzeug eine Vielzahl von und insbesondere vier Radarsensoren, an jeder Ecke des Fahrzeugs einen Radarsensor, vorzusehen. Ein ähnliches System, ebenfalls mit vier Sensoren, ist aus der EP 0 899 583 A2 vorbekannt.

Der vorliegenden Erfindung liegt nun die Aufgabe zugrunde, ein Fahrzeugumfelderkennungssystem bereitzustellen, das einen einfacheren Aufbau aufweist und dennoch funktionssicher arbeitet.

Diese Aufgabe wird durch ein Fahrzeugumfelderkennungssystem mit den Merkmalen des Anspruchs 1 gelöst. Hierdurch wird vorteilhafterweise erreicht, dass von vorne seitlich auf das Fahrzeug zukommende Objekte und insbesondere beim Heranfahren des Fahrzeugs an eine Kreuzung auf das Fahrzeug zukommender Kreuzungsverkehr sicher erkannt werden kann. Gerade dieser.genannte Bereich wird gemäß der Erfindung zum einen wenigstens abschnittsweise vom Front-Radarsensor und zum anderen wenigstens abschnittsweise von den Totwinkel-Radarsensoren erfasst. Hierdurch können die vom Front-Radarsensor und von den Totwinkel-Radarsensoren empfangenen Signale auf Redundanz hin überprüft werden. Dann, wenn die Sensoren ein entsprechendes Objekt detektieren, kann mit sehr großer Wahrscheinlichkeit davon ausgegangen werden, dass tatsächlich ein Objekt im relevanten Bereich vorhanden ist. Dabei hat das Vorsehen von Radarsensoren den Vorteil, dass das Umfeld des Fahrzeugs in Bereichen, die 40 - 50 m vom Fahrzeug entfernt sind, erkannt werden kann.

Dabei ist vorgesehen, dass lediglich drei Radarsensoren Verwendung finden, wobei ein Front-Radarsensor dann an der Fahrzeugfront im Bereich der Mittellängsachse des Fahrzeugs angeordnet ist und wobei auf beiden Seiten des Fahrzeugs vorteilhafterweise im seitlichen Heckbereich zwei in einander abgewandter Richtung abstrahlende Totwinkel-Radarsensoren vorgesehen sind. Die Totwinkel-Radarsensoren sind dabei vorteilhafterweise seitlich an einem hinteren Stoßfänger beziehungsweise an hinteren Stoßfängerteilen, angeordnet. Durch eine derartige Anordnung kann gewährleistet werden, dass mit den Totwinkel-Radarsensoren die für den Fahrzeuglenker im Rückspiegel nicht sichtbaren Totwinkelbereiche von den Radarsensoren erfasst werden.

Gemäß einer vorteilhaften Ausgestaltung der Erfindung finden Multi-Beam-Radarsensoren als Front-Radarsensor und/oder als Totwinkel-Radarsensor Verwendung. Mit derartigen Sensoren, die mehrere in unterschiedliche Richtungen verlaufende Strahlengänge aufweisen, kann bestimmt werden, in welchem Strahlengang beziehungsweise in welchen Strahlengängen Objekte erkannt werden. Insofern kann mittels lediglich einem Sensor genau zugeordnet werden, in welcher Richtung ein entsprechendes Objekt erkannt wird.

Um mit möglichst wenig Sensoren auszukommen, kann die Erfindung vorsehen, dass die Erfassungsbereiche des Front-Radarsensor und/oder des Totwinkel-Radarsensors einen Winkel von 120 - 180° und insbesondere einen Winkel im Bereich von 150° einschließen. Die einzelnen Radarsensoren decken folglich einen vergleichsweise großen Bereich ab.

Die Totwinkel-Radarsensoren sind dabei vorteilhafterweise so angeordnet, dass ihre Hauptabstrahlrichtungen mit der Mittellängsachse des Fahrzeugs einen der Fahrzeugfront abgewandten Winkel von 80 - 90° und insbesondere einen Winkel von 95° einschließen. Die Hauptabstrahlrichtungen der Radarsensoren sind dann, wenn ein entsprechender Winkel von 95° eingeschlossen wird, um 5° nach schräg hinten gerichtet. Auch hierdurch wird gewährleistet, dass die Totwinkel-Radarsensoren die tatsächlichen Totwinkelbereiche fassen, wobei dennoch mit lediglich drei Radarsensoren das gesamte, sich über 360° erstreckende Umfeld des Fahrzeugs sicher erkannt werden kann. Die seitlich vor dem Fahrzeug gelegenen Bereiche werden, gemäß der Erfindung, von jeweils zwei Radarsensoren zur redundanten Überwachung erfasst.

Dabei kann die Hauptabstrahlrichtung des Front-Radarsensors parallel zur oder in der Mittellängsachse des Fahrzeugs verlaufen. Die Hauptabstrahlrichtung ist dann in Fahrtrichtung des Fahrzeugs gerichtet.

Gemäß einer weiteren, besonders bevorzugten Ausführungsform der Erfindung ist das Fahrzeugumfelderkennungssystem mit einem Fahrzeugnavigationssystem gekoppelt, wobei bei Normalfahrt der Totwinkel-Radarsensor den Totwinkelbereich überwacht und wobei bei Heranfahrt des Fahrzeugs an eine Kreuzung mit dem Totwinkel-Radarsensor und dem Front-Radarsensor der seitlich vor dem Fahrzeug liegende Bereich überwacht wird. Eine derartige Ausbildung hat den Vorteil, dass aufgrund der Kopplung mit dem Navigationssystem das Fahrzeugumfelderfassungssystem Informationen erhält, wann mit einer Kreuzung zu rechnen ist. Dann, wenn sich das Fahrzeug einer Kreuzung nähert, kann der seitlich vor dem Fahrzeug liegende Bereich, in dem sich seitlich nähernde Objekte auftreten können, gezielt überwacht werden. Ein derart gezieltes Überwachen des seitlich vorderen Bereichs hat den Vorteil, dass Rechnerressourcen nur dann gebraucht werden, wenn tatsächlich mit einem sich seitlich nähernden Objekt im Bereich einer Kreuzung zu rechnen ist. Bei Normalfahrt des Fahrzeugs, ohne dass sich eine Kreuzung nähert, kann sich der Erfassungsbereich des Totwinkel-Radarsensors auf den tatsächlichen Totwinkelbereich beschränken.

Erfindungsgemäß kann zudem vorgesehen sein, dass bei Heranfahrt an eine Kreuzung die Auswerteeinheit den Front-Radarsensor und den wenigstens einen Totwinkel-Radarsensor synchron in den sich überlappenden Erfassungsbereichen ansteuert. Dies hat den Vorteil, dass die vom einen Radarsensor ausgesandten Signale auch von dem jeweils anderen Radarsensor empfangen werden können. Die Signale können folglich überlagert werden, was zu einer erhöhten Genauigkeit der Erkennung von in dem Überlappungsbereich vorhandenen Objekten führt.

Wie eingangs erwähnt, wird mit den Radarsensoren der Fernbereich des Fahrzeugs bis ca. maximal 50 m Fahrzeugentfernung überwacht. Um zusätzlich Informationen im Nahbereich des Fahrzeugs zu erhalten, kann gemäß einer vorteilhaften Ausgestaltung der Erfindung vorgesehen sein, dass das Fahrzeugumfelderkennungssystem wenigstens einen mit der Auswerteeinheit gekoppelten Ultraschallsensor umfasst, mit dem der Fahrzeugnahbereich überwacht wird.

Dabei können Ultraschallsensoren insbesondere im seitlichen mittleren Bereich des Fahrzeugs vorgesehen sein, wobei die Ultraschallsensoren insbesondere den Nahbereich bis 5 m und insbesondere bis 2 m überwachen. Gerade dann, wenn lediglich drei Radarsensoren vorgesehen sind, wobei die beiden Totwinkel-Radarsensoren seitlich am hinteren Bereich des Fahrzeugs angeordnet sind, ergibt sich eine Detektionslücke im seitlichen Nahbereich des Fahrzeugs. Diese Detektionslücke kann vorteilhafterweise mit im seitlichen, mittleren Bereich des Fahrzeugs angeordneten Ultraschallsensoren geschlossen werden. Die Sensoren sind dabei vorzugsweise auf jeder Seite des Fahrzeugs im Bereich der Vordertüren oder der B-Säule vorgesehen. Das Vorsehen von je einem Ultraschallsensor auf je einer Seite des Fahrzeugs kann dabei ausreichend sein. Die Ultraschallsensoren können erfindungsgemäß auch am oder im Außenspiegel und/oder am oder im Türschloss der Fahrzeugtüren angeordnet sein.

Um Rechenleistung und zur Verfügung zu stellende Energie optimal auszunützen, kann vorgesehen sein, dass die Ultraschallsensoren nur dann aktiviert werden, wenn das Fahrzeug an eine Kreuzung heranfährt. Hierbei ist vorteilhaft, wenn das Fahrzeugumfelderkennungssystem mit einem Navigationssystem gekoppelt ist.

Vorteilhaft kann auch sein, dass die Auswerteeinheit derart ausgebildet ist, dass sie die Ultraschallsensoren nur dann aktiviert, wenn ein Spurerkennungssystem im Betrieb ist. Mit Spurerkennungssystemen wird erkannt, ob das Fahrzeug die Spur hält und/oder ungewollterweise einen Spurwechsel vornimmt. Ist ein derartiges Spur.erkennungssystem aktiviert, kann der den zeitlichen Nahbereich des Fahrzeugs überwachende Ultraschallsensor dazu verwendet werden, um beilspielsweise den Abstand des Fahrzeugs zu einer seitlichen Fahrbahnbegrenzung zu erkennen.. Verringert sich der Abstand vom Fahrzeug zu der Fahrbahnbegrenzung, so kann dies ein Anzeichen für einen Spurwechsel sein.

Gemäß einer weiteren Ausbildung der Erfindung ist denkbar, dass die Ultraschallsensoren nur dann aktiviert werden, wenn ein abnormales Fahrverhalten erkannt wird. Ein abnormales Fahrverhalten kann dabei beispielsweise eine bevorstehende Kollision, ein Eingreifen eines Fahrzeugstabilisierungssystems (ESP^{®}) und/oder ein Schleudern des Fahrzeugs sein. Die Feststellung, ob ein abnormales Fahrverhalten vorliegt oder nicht, kann dabei von der Auswerteeinheit unter Zuhilfenahme der Radarsensoren und/oder von anderen Fahrzeugsystemen erkannt werden. Erkennen andere Fahrzeugsysteme wie beispielsweise Brems-, Fahrzeugstabilisierungs- oder Navigationssysteme ein solches Fahrverhalten, so können diese anderen Systeme dem erfindungsgemäßen Fahrzeugumfelderkennungssystem diesbezügliche Informationen übersenden. Im Falle einer bevorstehenden Kollision kann dann beispielsweise über die Ultraschallsensoren festgestellt werden, wann ein genauer Kollisionszeitpunkt eintritt und welcher Fahrzeugbereich davon betroffen ist. Abhängig davon können entsprechende Maßnahmen im Fahrzeug vorgenommen werden; beispielsweise können gezielt Airbags und/oder andere Sicherheitssysteme vorbereitet und aktiviert werden.

Weitere Einzelheiten und vorteilhafte Ausgestaltungen der Erfindung sind der nachfolgenden Beschreibung zu entnehmen, in zwei Ausführungsbeispiele eines erfindungsgemäßen Fahrzeugumfelderkennungssystems näher beschrieben und erläutert sind.

Es zeigen:
- Figur 1: die Draufsicht auf ein Fahrzeug mit einem erfindungsgemäßen Fahrzeugumfelderkennungssystem beim Heranfahren an eine Kreuzung,
- Figur 2: die Draufsicht des Fahrzeugs gemäß Figur 1 mit zusätzlichen Ultraschallsensoren,
- Figur 3: eine Vergrößerung des rechten hinteren Heckbereichs des Fahrzeugs gemäß Figur 1 und 2 und
- Figur 4: ein Diagramm, bei dem der Abstand eines sich dem Fahrzeug nähernden Objekts über der Zeit ausgetragen ist.

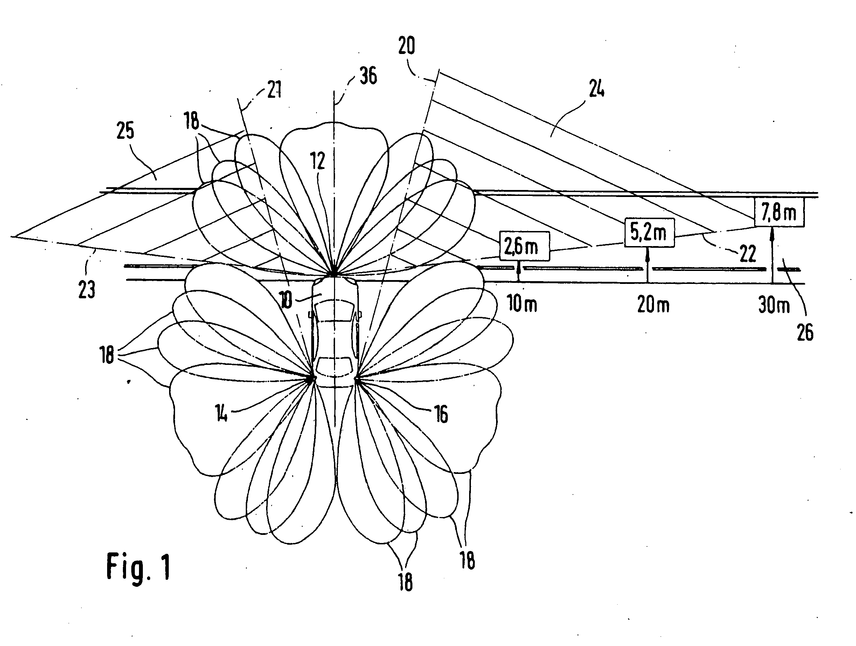

In der Figur 1 ist ein Fahrzeug 10 dargestellt, das ein erfindungsgemäßes Fahrzeugumfelderkennungssystem aufweist. Das Fahrzeugumfelderkennungssystem umfasst dabei einen Front-Radarsensor 12 und zwei Totwinkel-Radarsensoren 14, 16. Der

Front-Radarsensor 12 ist dabei im Bereich der Mittellängsachse 36 an der Fahrzeugfront angeordnet. Die beiden Totwinkel-Radarsensoren 14, 16 sind im hinteren Bereich des Fahrzeugs seitlich angeordnet. Die Radarsensoren 12, 14, 16 sind dabei als Multi-Beam-Radarsensoren ausgebildet, die jeweils mehrere in unterschiedliche Richtungen verlaufende Strahlengänge aufweisen. In der Figur 1 sind einige dieser Strahlengänge mit der Bezugszahl 18 exemplarisch gekennzeichnet. Die insgesamt drei Radarsensoren 12, 14, 16 sind mit einer in den Figuren nicht dargestellten Auswerteeinheit verbunden, die die einzelnen Sensoren ansteuert beziehungsweise deren Ausgangs- und Eingangssignale auswertet. Mit den Radarsensoren 12, 14, 16 kann das Fernumfeld des Fahrzeugs bis zu einem Bereich von circa 30 m bis 50 m erkannt werden. In der Figur 1 nimmt es den Anschein, wie wenn die Strahlengänge 18 lediglich einen Bereich bis circa zu 10 m detektieren. Diese Darstellung ist rein exemplarisch und nicht maßstabsgemäß; w.ie erwähnt wird ein Bereich von circa 30 bis 50 m um das Fahrzeug detektiert.

Im Normalbetrieb des Fahrzeugs wird mit dem Front-Radarsensor das vor dem Fahrzeug liegende Umfeld detektiert und mit den beiden Totwinkel-Radarsensoren 14, 16 die im seitlich hinteren Bereich des Fahrzeugs liegenden Totwinkelbereiche. Die insgesamt drei vorgesehenen Radarsensoren 12, 14, 16 weisen jeweils einen Erfassungsbereich auf, der einen Winkel von circa 150° einschließt. In der Figur 1 ist die nach vorne gerichtete Grenzlinie 20 des Totwinkel-Radarsensors 16 sowie die zur rechten Seite gerichtete Grenzlinie 22 des Front-Radarsensors 12 dargestellt. Der in der Figur 1 rechts neben der Grenzlinie 20 liegende Bereich wird folglich vom Totwinkel-Radarsensor 16 erfasst; der oberhalb der Grenzlinie 22 liegende Bereich vom Front-Radarsensor 12. Insgesamt ergibt sich ein in der Figur 1 gestrichelt dargestellter, zwischen den beiden Grenzlinien 20 und 22 liegender Überlappungsbereich 24, der von den beiden Radarsensoren 12 und 16 erfasst wird. Der Überlappungsbereich 24 liegt dabei, wie ebenfalls aus der Figur 1 deutlich wird, seitlich vor dem Fahrzeug. Entsprechend dem Überlappungsbereich 24 weisen die Erfassungsbereiche der beiden Radarsensoren 12 und 14 Grenzlinien 21 und 23 sowie einen in Figur 1 auf der linken Seite, vor dem Fahrzeug liegenden Überlappungsbereich 25 auf.

Aufgrund der seitlich vor den Fahrzeugen liegenden Überlappungsbereichen 24, 25 der Erfassungsbereiche der Radarsensoren 12, 14 und 12, 16 kann redundant festgestellt werden, ob Objekte seitlich vor dem Fahrzeug vorhanden sind beziehungsweise auf das Fahrzeug 10 zukommen. Dabei ist vorteilhaft, wenn das Fahrzeug 10 ein Navigationssystem aufweist, welches mit dem erfindungsgemäßen Fahrzeugumfelderkennungssystem gekoppelt ist. Dann, wenn das Fahrzeug gemäß den Informationen des Navigationssystems auf eine Kreuzung zufährt, kann in einem Kreuzungs-Überwachungs-Modus besonderer Augenmerk auf die seitlich vor dem Fahrzeug liegenden Überlappungsbereiche 24, 25 gerichtet werden. Sollten auf der senkrecht zur Mittellängsachse 36 des Fahrzeugs in der Figur 1 dargestellten Fahrbahn 26 Fahrzeuge auf das Fahrzeug 10 zukommen, so können diese mit dem erfindungsgemäßen Fahrzeugumfelderkennungssystem sicher von jeweils zwei Radarsensoren redundant erkannt werden. Dabei können die Radarsensoren 12, 14 und 12, 16 derart synchron zueinander angesteuert werden, dass sie auch Reflexionssignale des jeweils anderen Sensors detektieren.

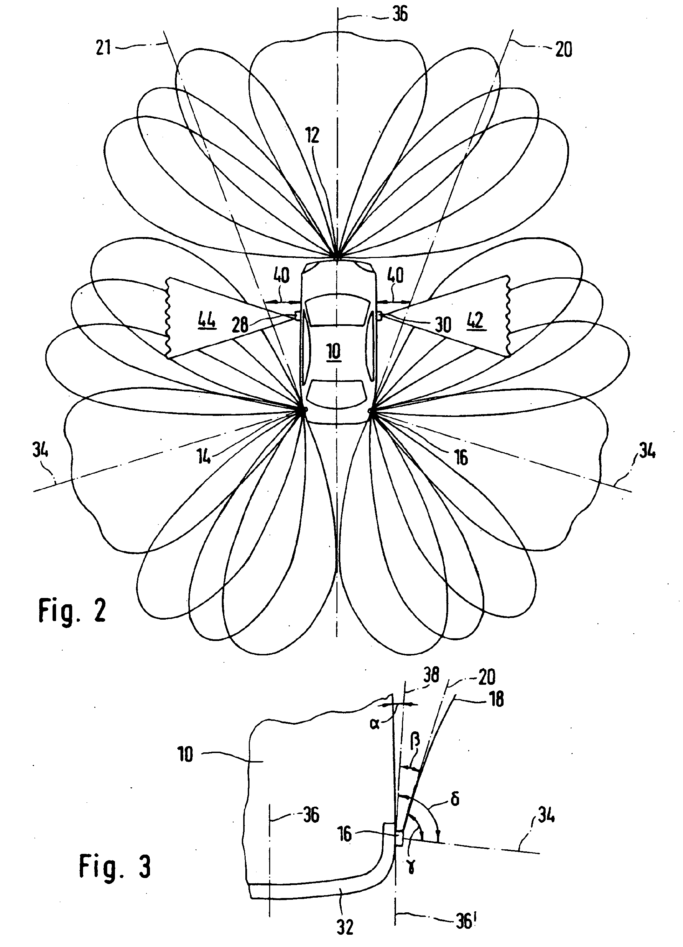

In der Figur 2, die das Fahrzeug 10 in Vergrößerung zeigt, sind neben den drei Radarsensoren seitlich am Fahrzeug zwei einander gegenüberliegende, in jeweils abgewandte Abstrahlrichtungen abstrahlende Ultraschallsensoren 28 und 30 angeordnet. Die geometrischen Verhältnisse, unter welchen die beiden Totwinkel-Radarsensoren im Heckbereich des Fahrzeugs 10 angeordnet sind, sind in der Figur 3 zu erkennen. Figur 3 zeigt einen Ausschnitt auf die Draufsicht des rechten Heckbereichs des Fahrzeugs 10. Der hintere Stoßfänger des Fahrzeugs ist dabei mit dem Bezugszeichen 32 angedeutet. Der Totwinkel-Radarsensor 16 ist dabei derart angeordnet, dass seine Hauptabstrahlrichtung 34 mit der Mittellängsachse des Fahrzeugs 36 beziehungsweise einer dazu parallel verlaufenden Linse 36' einen Winkel δ von 95° einschließt. Die senkrecht zur Hauptabstrahlrichtung 34 verlaufende Achse 38 schließt mit der Mittellängsachse 36 beziehungsweise 36' einen Winkel α von 5° ein. Aufgrund des sich über 150° erstreckenden Erfassungsbereich des Totwinkel-Radarsensors 16 schließt die Grenzlinie 20 mit der Achse 38 einen Winkel β von 15° ein. Der Winkel γ zwischen der Grenzlinie 20 und der Hauptabstrahlrichtung 34 beträgt folglich 75°. Der Totwinkel-Radarsensor 14 ist dabei symmetrisch zum Totwinkel-Radarsensor 16 auf der anderen Seite des Stoßfängers 32 angeordnet.

Wie aus Figur 2 deutlich wird, ergibt sich aufgrund der beschriebenen Anordnung der Totwinkel-Radarsensoren 14, 16 im vorderen Bereich des Fahrzeugs jeweils eine zwischen dem Fahrzeug 10 und den Grenzlinien 20, 21 liegender Detektionslücke 40, die von den Totwinkel-Radarsensoren 14 beziehungsweise 16 nicht erkannt wird. Um in diesem Nahbereich dennoch eine Umfelderkennung zu gewährleisten, sind die beiden Ultraschallsensoren 28, 30 im Bereich der seitlichen Außenspiegel des Fahrzeugs 10 angeordnet. Mit den Ultraschallsensoren 28, 30 können insbesondere der seitliche Bereich 40 zwischen den Ultraschallsensoren 28, 30 und den jeweiligen Grenzlinien 20, 21 erkannt werden. Die Ultraschallsensoren 28, 30 detektieren dabei insbesondere den Nahbereich des Fahrzeugs bis zu einem Abstand von circa 2 m. Der von den Ultraschallsensoren 28, 30 jeweils detektierte Erfassungsbereich ist in der Figur 2 mit den Bezugszahlen 42, 44 gekennzeichnet.

Im Normalbetrieb des Fahrzeugs ist es nicht erforderlich, dass die Ultraschallsensoren aktiviert sind. Beispielsweise ist denkbar, dass bei Heranfahren des Fahrzeugs an eine Kreuzung ein Aktivieren der Ultraschallsensoren erfolgt.

Ein Aktivieren der Ultraschallsensoren 28, 30 kann auch dann sinnvoll sein, wenn ein Spurerkennungssystem des Fahrzeugs in Betrieb ist. Mit den Ultraschallsensoren kann dann beispielsweise eine Fahrbahnbegrenzungsmarkierung detektiert werden.

Zudem ist denkbar, dass die Ultraschallsensoren 28, 30 auch dann aktiviert werden, wenn ein abormales Fahrverhalten vom erfindungsgemäßen Fahrzeugumfelderkennungssystem oder von einem anderen Fahrzeugsystem erkannt wird. Über die Ultraschallsensoren 28, 30 kann dann bestimmt werden, ob in dem von den Ultraschallsensoren 28, 30 detektierten Bereich mit einer Kollision zu rechnen ist.

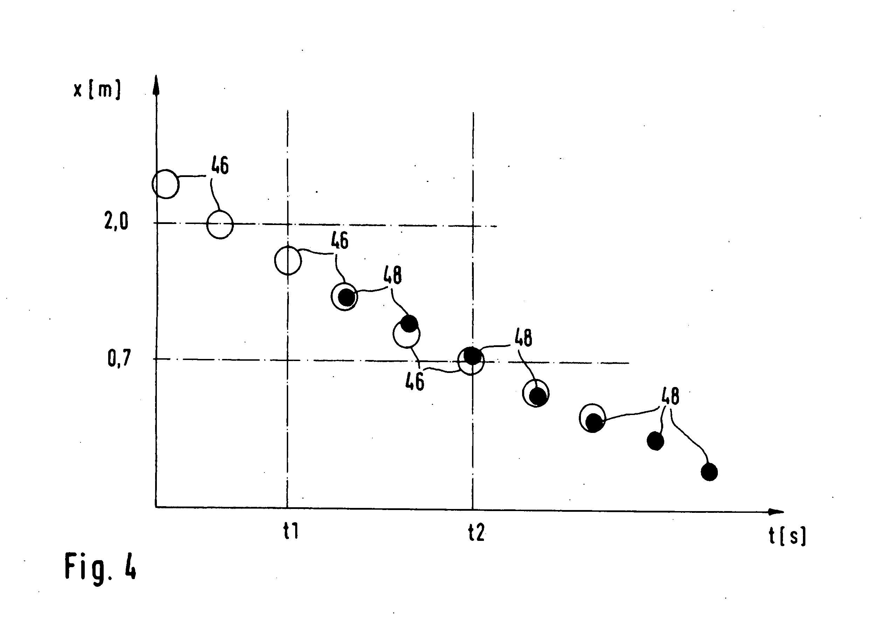

In der Figur 4 ist dargestellt, wie ein Objekt zunächst von wenigstens einem Radarsensor und bei weiterer Annäherung an das Fahrzeug von einem Ultraschallsensor detektiert wird. Bis zum Zeitpunkt t1 wird das Objekt lediglich von den Radarsensoren detektiert; das entsprechende Signal ist durch einen Ring 46 dargestellt. Im Zeitpunkt t1 hat das Objekt einen Abstand von etwas weniger als 2 m zum Fahrzeug. Bei einer Zeit größer t1 gerät das Objekt zusätzlich in den Erfassungsbereich eines Ultraschallsensors, dessen Signal als ausgefüllter Kreis 48 in Figur 4 dargestellt ist. Bis zum Zeitpunkt t2 wird das Objekt folglich von den Radarsensoren und zusätzlich von einem Ultraschallsensor detektiert. Im Bereich t > t2 wird das Signal der Radarsensoren aufgrund des geringen Abstands des Objekts zum Fahrzeug ungenau beziehungsweise erlischt; die Detektion des Objekts erfolgt dann ausschließlich mittels Ultraschallsensoren.

## Patentansprüche

1. Fahrzeugumfelderkennungssystem, insbesondere zur Erkennung von seitlich auf ein Fahrzeug (10) zukommenden Objekten und/oder zukommendem Kreuzungsverkehr, mit wenigstens einem den seitlich neben dem Fahrzeug (10) liegenden Totwinkelbereich erfassenden Totwinkel-Radarsensor (14, 16), mit wenigstens einem den vor dem Fahrzeug (10) liegenden Bereich erfassenden Front-Radarsensor (14), und mit einer Auswerteeinheit zur Auswertung der Ausgangs- und/oder Eingangssignale des Totwinkel-Radarsensors (14, 16) und des Front-Radarsensors (12), **dadurch gekennzeichnet, dass** insgesamt lediglich drei Radarsensoren (12, 14, 16) Verwendung finden, wobei ein Front-Radarsensor (12) an der Fahrzeugfront im Bereich der Mittellängsachse (36) des Fahrzeugs (10) angeordnet ist und wobei auf beiden Seiten des Fahrzeugs (10) im seitlichen Heckbereich zwei Totwinkel-Radarsensoren vorgesehen sind, deren Erfassungsbereiche zueinander in Bezug zur Mittellängsachse (36) symmetrisch sind, wobei der Erfassungsbereich des Front-Radarsensors (12) und der Erfassungsbereich des jeweiligen Totwinkel-Radarsensors (14, 16) sich im seitlichen, vor dem Fahrzeug liegenden Bereich (24, 25) wenigstens abschnittsweise überlappen.

2. Fahrzeugumfelderkennungssystem nach Anspruch 1, **dadurch gekennzeichnet, dass** der Totwinkel-Radarsensor (14, 16) und/oder der Front-Radarsensor (12) als Multi-Beam-Radarsensoren mit mehreren in unterschiedliche Richtungen verlaufenden Strahlengängen ausgebildet sind.

3. Fahrzeugumfelderkennungssystem nach Anspruch 1 oder 2, **dadurch gekennzeichnet, dass** die Erfassungsbereiche des Front-Radarsensors (12) und/oder des Totwinkel-Radarsensors (14, 16) einen Winkel von 120° bis 180°, und insbesondere einen Winkel 150° einschließen.

4. Fahrzeugumfelderkennungssystem nach einem der vorhergehenden Ansprüche, **dadurch gekennzeichnet, dass** die Hauptabstrahlrichtung (34) des Totwinkel-Radarsensors (14, 16) mit der Mittellängsachse (36) des Fahrzeugs einen der Fahrzeugfront abgewandten Winkel (8) von 80° bis 90° und insbesondere von 95° einschließen.

5. Fahrzeugumfelderkennungssystem nach einem der vorhergehenden Ansprüche, **dadurch gekennzeichnet, dass** die Hauptabstrahlrichtung des Front-Radarsensors (12) parallel zur oder entlang der Mittellängsachse (36) des Fahrzeugs verläuft.

6. Fahrzeugumfelderkennungssystem nach einem der vorhergehenden Ansprüche, **dadurch gekennzeichnet, dass** das Umfelderfassungssystem mit einem Navigationssystem koppelbar ist, wobei bei Normalfahrt der Totwinkel-Radarsensor (14, 16) den Totwinkelbereich überwacht und dass bei Heranfahrt an eine Kreuzung mit dem Totwinkel-Radarsensor (14, 16) und dem Front-Radarsensor (12) der seitlich vor dem Fahrzeug liegende Bereich (24, 25) überwacht wird.

7. Fahrzeugumfelderkennungssystem nach Anspruch 6, **dadurch gekennzeichnet, dass** bei Heranfahrt an eine Kreuzung die Auswerteeinheit den Front-Radarsensor (12) und den wenigstens einen Totwinkel-Radarsensor (14, 16) synchron in den sich überlappenden Überwachungsbereichen (24, 25) ansteuert.

8. Fahrzeugumfelderkennungssystem nach einem der vorhergehenden Ansprüche, **dadurch gekennzeichnet, dass** das System wenigstens einen mit der Auswerteeinheit gekoppelten Ultraschallsensoren (28, 30) umfasst, mit dem der Fahrzeugnahbereich überwacht wird.

9. Fahrzeugumfelderkennungssystem nach Anspruch 8, **dadurch gekennzeichnet, dass** ein Ultraschallsensor (28, 30) im seitlichen mittleren Bereich des Fahrzeugs (10) vorgesehen ist, der den Nahbereich bis 5 Meter und insbesondere bis 2 Meter überwacht.

10. Fahrzeugumfelderkennungssystem nach Anspruch 8 oder 9, **dadurch gekennzeichnet, dass** auf jeder Seite des Fahrzeugs im Bereich der Vordertüren oder der B-Säule je ein Ultraschallsensor (28, 30) vorgesehen ist.

11. Fahrzeugumfelderkennungssystem nach Anspruch 8, 9 oder 10, **dadurch gekennzeichnet, dass** die Auswerteeinheit derart ausgebildet ist, dass sie den Ultraschallsensor (28, 30) dann aktiviert, wenn das Fahrzeug (10) an eine Kreuzung heranfährt.

12. Fahrzeugumfelderkennungssystem nach einem der Ansprüche 8 bis 11, **dadurch gekennzeichnet, dass** die Auswerteeinheit derart ausgebildet ist, dass sie den Ultraschallsensor (28, 30) dann aktiviert, wenn ein Spurerkennungssystem in Betrieb ist.

13. Fahrzeugumfelderkennungssystem nach einem der Ansprüche 8 bis 12, **dadurch gekennzeichnet, dass** die Auswerteeinheit derart ausgebildet ist, dass sie den Ultraschallsensor (28, 30) dann aktiviert, wenn ein abnormales Fahrverhalten erkannt wird.

## Claims

1. Vehicle surroundings detection system, in particular for detecting objects and/or intersection traffic approaching a vehicle (10) laterally, having at least one blind spot radar sensor (14, 16) which senses the blind spot area located laterally next to the vehicle (10), having at least one front radar sensor (14) which senses the area located ahead of the vehicle (10), and having an evaluation unit for evaluating the output signals and/or input signals of the blind spot radar sensor (14, 16) and of the front radar sensor (12), **characterized in that** in total only three radar sensors (12, 14, 16) are used, wherein a front radar sensor (12) is arranged on the front of the vehicle in the region of the central longitudinal axis (36) of the vehicle (10), and wherein two blind spot radar sensors, whose sensing ranges are symmetrical with respect to one another in relation to the central longitudinal axis (36), are provided on both sides of the vehicle (10) in the lateral rear area, wherein the sensing range of the front radar sensor (12) and the sensing range of the respective blind spot radar sensor (14, 16) overlap, at least in certain sections, in the lateral area (24, 25) located ahead of the vehicle.

2. Vehicle surroundings detection system according to Claim 1, **characterized in that** the blind spot radar sensor (14, 16) and/or the front radar sensor (12) are embodied as multi-beam radar sensors with multiple beam paths extending in different directions.

3. Vehicle surroundings detection system according to Claim 1 or 2, **characterized in that** the sensing ranges of the front radar sensor (12) and/or of the blind spot radar sensor (14, 16) include an angle of 120° to 180° and, in particular, an angle of 150°.

4. Vehicle surroundings detection system according to one of the preceding claims, **characterized in that** the main irradiation direction (34) of the blind spot radar sensor (14, 16) includes, with the central longitudinal axis (36) of the vehicle, an angle (8) of 80° to 90° and, in particular, of 95° facing away from the front of the vehicle.

5. Vehicle surroundings detection system according to one of the preceding claims, **characterized in that** the main irradiation direction of the front radar sensor (12) extends parallel to or along the central longitudinal axis (36) of the vehicle.

6. Vehicle surroundings detection system according to one of the preceding claims, **characterized in that** the surroundings sensing system can be coupled to a navigation system, wherein during normal travel the blind spot radar sensor (14, 16) monitors the blind spot area, and **in that** when an intersection is approached the area (24, 25) located laterally ahead of the vehicle is monitored with the blind spot radar sensor (14, 16) and the front radar sensor (12).

7. Vehicle surroundings detection system according to Claim 6, **characterized in that** when an intersection is approached, the evaluation unit actuates the front radar sensor (12) and the at least one blind spot radar sensor (14, 16) synchronously in the overlapping monitoring areas (24, 25).

8. Vehicle surroundings detection system according to one of the preceding claims, **characterized in that** the system comprises art least one ultrasonic sensor (28, 30) which is coupled to the evaluation unit and with which the area close to the vehicle is monitored.

9. Vehicle surroundings detection system according to Claim 8, **characterized in that** an ultrasonic sensor (28, 30) is provided in the lateral central region of the vehicle (10), which ultrasonic sensor (28, 30) monitors the close-range area up to 5 metres and, in particular, up to 2 metres.

10. Vehicle surroundings detection system according to Claim 8 or 9, **characterized in that** an ultrasonic sensor (28, 30) is respectively provided on each side of the vehicle in the region of the front doors or of the B pillar.

11. Vehicle surroundings detection system according to Claim 8, 9 or 10, **characterized in that** the evaluation unit is embodied in such a way that it activates the ultrasonic sensor (28, 30) when the vehicle (10) approaches an intersection.

12. Vehicle surroundings detection system according to one or Claims 8 to 11, **characterized in that** the evaluation unit is embodied in such a way that it activates the ultrasonic sensor (28, 30) when a lane-detection system is operational.

13. Vehicle surroundings detection system according to one of Claims 8 to 12, **characterized in that** the evaluation unit is embodied in such a way that it activates the ultrasonic sensor (28, 30) when abnormal driving behaviour is detected.

## Revendications

1. Système de reconnaissance de l'environnement d'un véhicule, notamment pour la reconnaissance d'objets et/ou d'un trafic d'intersection se dirigeant latéralement vers un véhicule (10), comprenant au moins un capteur radar d'angle mort (14, 16) couvrant une région d'angle mort située latéralement à proximité du véhicule (10), comprenant au moins un capteur radar avant (14) couvrant une région située à l'avant du véhicule (10), et comprenant une unité de traitement destinée à traiter les signaux de sortie et/ou d'entrée du capteur radar d'angle mort (14, 16) et du capteur radar avant (12), **caractérisé en ce qu'**on utilise au total seulement trois capteurs radars (12, 14, 16), dans lequel un capteur radar avant (12) est disposé à l'avant du véhicule dans la région de l'axe médian (36) du véhicule (10) et dans lequel deux capteurs radars d'angle mort sont prévus sur les deux côtés du véhicule (10) dans la région latérale arrière, dont les régions de détection sont symétriques l'une de l'autre par rapport à l'axe médian (36), dans lequel la région de détection du capteur radar avant (12) et la région de détection de chacun des capteurs radars d'angle mort (14, 16) se chevauchent au moins par sections dans la région latérale (24, 25) se situant à l'avant du véhicule.

2. Système de reconnaissance de l'environnement d'un véhicule selon à revendication 1, **caractérisé en ce que** le capteur radar d'angle mort (14, 16) et/ou le capteur radar avant (12) est/sont réalisé(s) sous la forme de capteurs radars multifaisceaux ayant de multiples trajets de rayonnement se propageant dans des directions différentes.

3. Système de reconnaissance de l'environnement d'un véhicule selon, la revendication 1 ou 2, **caractérisé en ce que** les régions de détection du capteur radar avant (12) et/ou du capteur radar d'angle mort (14, 16) couvrent un angle de 120° à 180° et plus particulièrement, un angle de 150°.

4. Système de reconnaissance de l'environnement d'un véhicule selon l'une des revendications précédentes, **caractérisé en ce que** la direction de rayonnement principale (34) du capteur radar d'angle mort (14, 16) couvre un angle (8) formé à l'avant du véhicule avec l'axe médian (36) du véhicule, de 80° à 90°, et plus particulièrement, de 95°.

5. Système de reconnaissance de l'environnement d'un véhicule selon l'une des revendications précédentes, **caractérisé en ce que** la direction de rayonnement principale du capteur radar avant (12) est orientée parallèlement à, ou le long de l'axe médian (36) du véhicule.

6. Système de reconnaissance de l'environnement d'un véhicule selon l'une des revendications précédentes, **caractérisé en ce que** le système de reconnaissance de l'environnement peut être couplé à un système de navigation, dans lequel, lors d'un déplacement normal, le capteur radar d'angle mort (14, 16) surveille la région d'angle mort et **en ce que**, lors du passage à une intersection, la région (24, 25) se situant latéralement à l'avant du véhicule est surveillée au moyen du capteur radar d'angle mort (14, 16) et du capteur radar avant (12).

7. Système de reconnaissance de l'environnement d'un véhicule selon la revendication 6, **caractérisé en ce que** lors du passage à une intersection, l'unité de traitement commande de manière synchrone le capteur radar avant (12) et l'au moins un capteur radar d'angle mort (14, 16) dans les régions surveillées (24, 25) se chevauchant mutuellement.

8. Système de reconnaissance de l'environnement d'un véhicule selon, l'une des revendications précédentes, **caractérisé en ce que** le système comprend au moins un capteur à ultrasons (28, 30) couplé(s) à l'unité de traitement, avec lequel/lesquels la région proche du véhicule est surveillée.

9. Système de reconnaissance de l'environnement d'un véhicule selon la revendication 8, **caractérisé en ce qu'**il est prévu dans la région médiane latérale du véhicule (10) un capteur à ultrasons (28, 30) qui surveille la région proche jusqu'à 5 mètres et plus particulièrement, jusqu'à 2 mètres.

10. Système de reconnaissance de l'environnement d'un véhicule selon la revendication 8 ou 9, **caractérisé en ce qu'**un capteur à ultrasons (28, 30) est prévu de chaque côté du véhicule dans la région des portes avant ou du montant B.

11. Système de reconnaissance de l'environnement d'un véhicule selon la revendication 8, 9 ou 10, **caractérisé en ce que** l'unité de traitement est conçue de telle manière qu'elle n'active le capteur à ultrasons (28, 30) que lorsque le véhicule (10) passe à une intersection.

12. Système de reconnaissance de l'environnement d'un véhicule selon l'une des revendications 8 à 11, **caractérisé en ce que** l'unité de traitement est conçue de manière à n'activer le capteur à ultrasons (28, 30) que lorsqu'un système de reconnaissance de voie est en fonctionnement.

13. Système de reconnaissance de l'environnement d'un véhicule selon l'une des revendications 8 à 12, **caractérisé en ce que** l'unité de traitement est conçue manière à n'activer le capteur à ultrasons (28, 30) que lorsqu'un mode de conduite anormal est reconnu.
